# EUROPÄISCHE PATENTSCHRIFT

(11) **EP 2 099 200 B1**
(45) Veröffentlichungstag und Bekanntmachung des Hinweises auf die Patenterteilung: **04.03.2020**
(21) Anmeldenummer: 09003074.3
(22) Anmeldetag: 04.03.2009
(51) Int. Cl.: H04L 29/08, G06F 16/957, H04M 1/725

(54) **Verfahren und Clienteinrichtung zum Anzeigen von Inhalten an einem mobilen Endgerät**
Method and client device for displaying contents on a mobile terminal
Procédé et dispositif client destinés à l'affichage de contenus sur un terminal mobile

(30) Priorität: 04.03.2008 DE 102008012514
(43) Veröffentlichungstag der Anmeldung: 09.09.2009
(73) Patentinhaber: Vodafone Holding GmbH, 40213 Düsseldorf (DE)
(72) Erfinder: Schmidt, Ulrich, 44269 Dormund (DE)
(74) Vertreter: Jostarndt Patentanwalts-AG

(56) Entgegenhaltungen:
- WO-A-02/17213
- WO-A-2007/071827
- US-A1- 2002 083 132
- US-A1- 2006 123 335
- US-B1- 6 931 439
- JIANG Z ET AL: "WEB PREFETCHING IN A MOBILE ENVIRONMENT" 1. Oktober 1998 (1998-10-01), IEEE PERSONAL COMMUNICATIONS, IEEE COMMUNICATIONS SOCIETY, US, PAGE(S) 25 - 34 , XP000786613 ISSN: 1070-9916 * das ganze Dokument *

## Beschreibung

### Technisches Gebiet

Die Erfindung betrifft ein Verfahren zum Anzeigen von ereignisbezogenen Inhalten an einem mobilen Endgerät, wobei die Inhalte einen ersten Bestandteil und einen mit dem ersten Bestandteil verknüpften zweiten Bestandteil umfassen und der zweite Bestandteil aufgrund einer während einer Anzeige des ersten Bestandteils ausgeführten Bedienaktion an dem mobilen Endgerät angezeigt werden kann.

Die Erfindung betrifft ferner eine Clienteinrichtung für ein mobiles Endgerät, die zur Durchführung des Verfahrens eingerichtet ist, sowie ein mobiles Endgerät, das die Clienteinrichtung umfasst.

### Hintergrund der Erfindung

Es ist bekannt, im Rahmen des Mobilfunks Informationsdienste bereitzustellen, die von einem Nutzer eines Mobilfunknetzes abonniert werden können und die Übermittlung von aktuellen Informationen vorsehen, die sich beispielsweise auf aktuelle Nachrichten, Verkehrsmeldungen oder Sportereignisse beziehen. Die Inhalte, bei denen es sich sowohl um Text- als auch um Audio- oder Videodaten handeln kann, werden durch einen Server über einen Datenübertragungskanal an das mobile Endgerät des Dienstnutzers übermittelt und an einer Anzeigeeinrichtung des mobilen Endgeräts angezeigt. Insbesondere können Informationen, beispielsweise im Rahmen eines so genannten Live-Tickers, nahezu unmittelbar nach dem Eintreten eines Ereignisses an das mobile Endgerät gesendet werden, so dass der Mobilfunknutzer Geschehnisse, wie beispielsweise Sportveranstaltungen, im Wesentlichen in Echtzeit verfolgen kann.

Bei bekannten Informationsdiensten, wie sie beispielsweise in der US 2006/0123335 A1 beschrieben werden, ist es vorgesehen, dass zunächst nur Kurzinformationen an das mobile Endgerät übertragen werden, um den Mobilfunknutzer über ein aktuelles Ereignis zu informieren. Die Kurzinformationen sind mit Verknüpfungen - so genannten "Links" - versehen, die von dem Mobilfunknutzer mittels einer Eingabeeinrichtung des mobilen Endgeräts ausgewählt werden können, wenn er weitergehende Informationen zu dem Ereignis zu erhalten wünscht. Aufgrund einer sich auf die ersten Daten bzw. die Verknüpfung beziehenden Bedienaktion an dem mobilen Endgerät werden dann weitergehende Informationen von dem Server auf das mobile Endgerät geladen und an dem mobilen Endgerät zur Anzeige gebracht. Die weiteren Informationen können beispielsweise Textdaten mit einem ausführlicheren Bericht über das Ereignis enthalten. Darüber hinaus können aufgrund der Bedienaktion auch sich auf das Ereignis beziehende Videodaten zu dem mobilen Endgerät übertragen werden. Auf diese Weise kann der Nutzer beispielsweise über eine Veränderung des Spielstands eines Fußballspiels anhand einer Kurzinformation informiert werden, die mit einer Verknüpfung zu Videodaten einer Torszene versehen ist, welche der Mobilfunknutzer nach einer Auswahl der Verknüpfung ansehen kann.

Bei derartigen Informationsdiensten besteht jedoch das Problem, dass die in einem Mobilfunknetz zur Datenübertragung zur Verfügung stehende Übertragungsbandbreite relativ gering ist, so dass die aufgrund der Auswahl vorgenommene Übertragung weitergehender Informationen mit einer relativ langen Wartezeit verbunden ist, die benötigt wird, um eine Verbindung zu dem Server aufzubauen und die Informationen von dem Server auf das mobile Endgerät zu übertragen. Dies ist für den Mobilfunknutzer sehr unkomfortabel und zeitraubend und verringert somit die Attraktivität solcher Informationsdienste erheblich.

Die WO 02/172213 A2 offenbart einen Mechanismus zur Verbesserung der Leistung eines Webservers. Wenn der Server über freie Kapazität verfügt, werden Inhalte ermittelt, die von einem Nutzer nachfolgend zu bereits übermittelten Inhalten aufgerufen werden können, und diese Inhalte werden vorab an das Endgerät des Nutzers übermittelt.

Aus der WO2007/071827A1 geht ein Verfahren zum Verteilen von Information in einem Kommunikationssystem hervor. Hierbei werden mehrere Seiten zu einem Paket zusammengefasst und an ein Endgerät übermittelt, so dass der Nutzer aufgrund eines einzigen Zugriffs auf einen Server Zugang zu den Seiten des Pakets erhält.

Die US2002/0083132A1 beschreibt ein Verfahren und ein System, bei denen miteinander in Beziehung stehende Webseiten dynamisch gebündelt werden. Die Bündel werden an das Endgerät eines Nutzers übermittelt, so dass auch dann auf miteinander in Beziehung stehende Webseiten zugegriffen werden kann, wenn keine Netzwerkverbindung besteht.

Die US 6,931,439 B1 beschreibt ein Verfahren zum Betreiben eines mobilen Endgeräts mit einem lokalen Speicher und einem Bildschirm. Webseiten werden vom mobilen Endgerät empfangen und im lokalen Speicher gespeichert. Ein Cache-Status jeder durch jede Verbindung identifizierten Webseite wird bestimmt. Der Cache-Status ausgewertet wird, um die Anzeige der Links einer Webseite auf dem Bildschirm des mobilen Endgeräts zu steuern.

### Darstellung der Erfindung

Es ist daher eine Aufgabe der vorliegenden Erfindung, ein Verfahren der eingangs genannten Art und eine zur Durchführung eines derartigen Verfahrens geeignete Clienteinrichtung so weiterzuentwickeln, dass der zweite Bestandteil der Inhalte rascher nach Ausführung der Bedienaktion angezeigt werden kann.

Die Aufgabe wird durch ein Verfahren mit den Merkmalen des Anspruchs 1 und durch eine Clienteinrichtung mit den Merkmalen des Anspruchs 10 gelöst.

Demgemäß wird ein Verfahren der eingangs genannten Art so durchgeführt, dass der erste Bestandteil der Inhalte in Verbindung mit dem zweiten Bestandteil der Inhalte in dem mobilen Endgerät empfangen wird, und dass der erste Bestandteil der Inhalte erst dann an dem mobilen Endgerät angezeigt wird, wenn der zweite Bestandteil der Inhalte zumindest teilweise in dem mobilen Endgerät empfangen worden ist.

Ferner wird eine Clienteinrichtung für ein mobiles Endgerät zum Darstellen von über ein Mobilfunknetz bereitgestellten ereignisbezogenen Inhalten geschaffen, wobei die Inhalte einen ersten Bestandteil und einen mit dem ersten Bestandteil verknüpften zweiten Bestandteil umfassen und wobei die Clienteinrichtung eine grafische Benutzerschnittstelle bereitstellt, die dazu ausgebildet ist, den zweiten Bestandteil aufgrund einer während einer Anzeige des ersten Bestandteils ausgeführten Bedienaktion anzuzeigen. Die Clienteinrichtung ist dazu ausgebildet, den ersten Bestandteil der Inhalte in Verbindung mit dem zweiten Bestandteil der Inhalte zu empfangen. Ferner ist die grafische Benutzerschnittstelle dazu ausgebildet, den ersten Bestandteil der Inhalte erst dann anzuzeigen, wenn der zweite Bestandteil der Inhalte zumindest teilweise in dem mobilen Endgerät empfangen worden ist.

Die Erfindung beinhaltet die Idee, dass der zweite Bestandteil der Inhalte bereits in Verbindung mit dem ersten Bestandteil der Inhalte in dem mobilen Endgerät empfangen wird. Dies kann beispielsweise dadurch erreicht werden, dass bei einer Übertragung des ersten Bestandteils an das mobile Endgerät auch eine Übertragung des zweiten Bestandteils der Inhalte vorgenommen wird. Zudem ist es vorgesehen, dass der erste Bestandteil der Inhalte erst dann an dem mobilen Endgerät angezeigt wird, wenn der zweite Bestandteil der Inhalte zumindest teilweise in dem mobilen Endgerät empfangen worden ist. Hierdurch wird erreicht, dass die Bedienaktion zum Aufrufen des zweiten Bestandteils der Inhalte erst dann durchgeführt wird, wenn der zweite Bestandteil zumindest teilweise in dem mobilen Endgerät vorliegt. Hierdurch kann der zweite Bestandteil im Wesentlichen unmittelbar nach der Bedienaktion zumindest teilweise zur Anzeige gebracht werden.

Ein weiterer Vorteil der Erfindung ergibt sich im Hinblick auf Inhalte, die fortlaufend oder beim Auftreten eines Ereignisses aktualisiert werden. In diesem Zusammenhang stellt die Erfindung sicher, dass der erste und der zweite Bestandteil der Inhalte konsistent sind. D.h. es wird verhindert, dass ein aktualisierter erster Bestandteil der Inhalte angezeigt wird, bevor ein entsprechend aktualisierter zweiter Bestandteil der Inhalte in dem mobilen Endgerät verfügbar ist. Ansonsten könnte beispielsweise der Fall eintreten, dass aufgrund einer Bedienaktion, die während der Anzeige des aktualisierten ersten Bestandteils der Inhalte erfolgt, eine Anzeige eines noch nicht aktualisierten zweiten Bestandteils erfolgt.

Die Inhalte und insbesondere der erste und der zweite Bestandteil der Inhalte können Text-, Bild- und/oder Videodaten umfassen. Insbesondere kann es vorgesehen sein, dass der erste Bestandteil Textinformationen umfasst, die ein bestimmtes Ereignis beschreiben und der zweite Bestandteil Bild- und/oder Videodaten des Ereignisses beinhaltet.

Die Inhalte können sich beispielsweise auf einen Sportwettbewerb beziehen, der über die grafische Benutzerschnittselle von dem Nutzer des mobilen Endgeräts verfolgt werden kann. Insbesondere können sich die Inhalte auf einen Fußballwettbewerb beziehen, wobei der erste Bestandteil der Inhalte beispielsweise eine Meldung über ein Ereignis während einer im Rahmen des Fußballwettbewerbs stattfindenden Begegnung, wie etwa einen Torschuss, enthalten kann, oder einen Spielstand der Begegnung angeben kann, und der zweite Bestandteil beispielsweise weitere Informationen zu dem Torschuss oder über die Begegnung beinhalten kann.

In einer Ausgestaltung des Verfahrens und der Clienteinrichtung ist es vorgesehen, dass der erste und der zweite Bestandteil der Inhalte von einem Server an das mobile Endgerät übertragen werden.

Die Übertragung erfolgt vorzugsweise über ein Datennetzwerk, das ein Mobilfunknetzwerk umfasst, mit dem das mobile Endgerät verbunden ist.

Eine weitere Ausgestaltung des Verfahrens und der Clienteinrichtung sieht vor, dass der erste und der zweite Bestandteil der Inhalte im Bereich des Servers gespeichert sind und im Bereich des Servers aktualisiert werden.

Dabei kann es insbesondere vorgesehen sein, dass die Inhalte beim Auftreten eines Ereignisses aktualisiert werden, so dass im Bereich des Servers gespeicherte Inhalte im Wesentlichen in Echtzeit aktualisiert werden können.

Dabei sieht eine Ausführungsform des Verfahrens und der Clienteinrichtung vor, dass der erste und der zweite Bestandteil der Inhalte aufgrund einer im Bereich des Servers vorgenommenen Aktualisierung von dem Server an das mobile Endgerät gesendet werden.

Hierdurch können Aktualisierungen sehr rasch an das mobile Endgerät gesendet werden, so dass die Inhalte sehr zeitnah zum Auftreten eines Ereignisses und einer damit verbundenen Aktualisierung der Inhalte in dem mobilen Endgerät vorliegen.

Gleichfalls ist es in einer Ausführungsform des Verfahrens und der Clienteinrichtung vorgesehen, dass der erste und der zweite Bestandteil der Inhalte durch das mobile Endgerät in regelmäßigen Zeitabständen von dem Server abgerufen werden.

Ferner beinhaltet eine Ausgestaltung des Verfahrens und der Clienteinrichtung, dass der empfangene erste Bestandteil der Inhalte einen in dem mobilen Endgerät gespeicherten ersten Bestandteil der Inhalte ersetzt und/oder der empfangene zweite Bestandteil der Inhalte einen in dem mobilen Endgerät gespeicherten zweiten Bestandteil der Inhalte ersetzt.

Bei dem empfangenen ersten oder zweiten Bestandteil der Inhalte handelt es sich dabei vorzugsweise um einen aktualisierten Bestandteil, welcher einen entsprechenden Bestandteil der Inhalte mit überholten Informationen ersetzt.

Darüber hinaus ist eine Weiterbildung des Verfahrens und der Clienteinrichtung dadurch gekennzeichnet, dass der erste Bestandteil und/oder der zweite Bestandteil der Inhalte zusammen mit einem Grafikelement angezeigt werden, wobei das Grafikelement anhand einer zusammen mit dem ersten Bestandteil und/oder dem zweiten Bestandteil der Inhalte an das mobile Endgerät übertragenen Identifizierungsangabe aus einer Mehrzahl von in dem mobilen Endgerät gespeicherten Grafikelementen ausgewählt wird.

Diese Weiterbildung hat den Vorteil, dass die Grafikelemente, die in der Regel einen nicht unerheblichen Datenumfang haben, nicht an das mobile Endgerät übermittelt werden müssen. Hierdurch wird die Zeit zur Übertragung der Inhalte an des mobile Endgerät verringert und die Netzlast des zur Übertragung verwendeten Netzwerks verringert.

Eine Ausführungsform des Verfahrens und der Clienteinrichtung zeichnet sich zudem dadurch aus, dass der erste und der zweite Bestandteil der Inhalte jeweils in einer Maske einer grafischen Benutzeroberfläche angezeigt werden. Während der Anzeige der den ersten Bestandteil der Inhalte enthaltenden Maske kann dabei vorzugsweise die Bedienaktion zum Aufruf des zweiten Bestandteils der Inhalte erfolgen. Aufgrund der Bedienaktion wird dann eine Maske mit dem zweiten Bestandteil der Inhalte dargestellt.

Ferner wird ein Computerprogrammprodukt bereitgestellt, das sich dadurch auszeichnet, dass es ein Computerprogramm aufweist, das Anweisungen zur Ausführung eines Verfahrens mit einem oder mehreren der zuvor beschriebenen Merkmale umfasst.

Zudem wird ein mobiles Endgerät bereitgestellt, das dadurch gekennzeichnet ist, dass es eine Clienteinrichtung mit einem oder mehreren der zuvor beschriebenen Merkmale umfasst.

Die genannten und weitere Vorteile, Besonderheiten und zweckmäßige Ausgestaltungen der Erfindung werden auch anhand der Beschreibung von Ausführungsbeispielen deutlich, die nachfolgend unter Bezugnahme auf die Figuren erfolgt.

### Kurze Beschreibung der Figuren

Von den Figuren zeigen
- Fig. 1: eine schematische Darstellung eines mobilen Endgeräts, das über ein Netzwerk mit einem Server verbunden ist, und
- Fig. 2-7: schematische Darstellungen von Masken einer grafischen Benutzeroberfläche zur Darstellung von Inhalten an dem mobilen Endgerät.

### Ausführliche Beschreibung von Ausführungsbeispielen

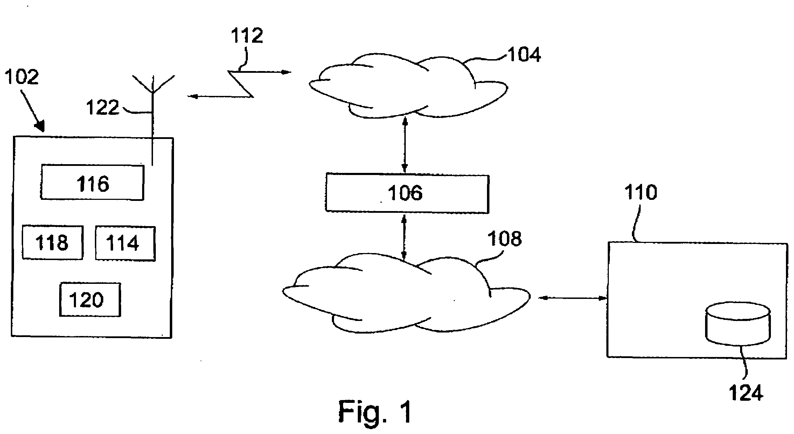

Figur 1 zeigt in schematischer Darstellung ein mobiles Endgerät 102, welches über ein Netzwerk 104, 106, 108 mit einem Server 110 verbunden ist. Das Netzwerk 104, 106, 108 umfasst ein Mobilfunknetzwerk 104, das vorzugsweise als ein paketvermittelndes Netzwerk ausgebildet ist. Beispielsweise handelt es sich bei dem Mobilfunknetzwerk 104 um die paketvermittelnde Domäne eines UMTS-Netzes (UMTS: Universal Mobile Telecommunications System) oder ein GPRS-Netz (GPRS: General Packet Radio Service). Das Mobilfunknetzwerk 104 steht über einen Gateway 106 mit einem Datennetzwerk 108 in Verbindung, bei dem es sich beispielsweise um das Internet oder ein Intranet handelt. An das Datennetzwerk 108 ist der Server 110 angebunden.

Das mobile Endgerät 102 umfasst eine Funkantenne 122, die den Aufbau einer Verbindung zu dem Telekommunikationsnetz 104 über eine Luftschnittstelle 112 gestattet. Weiterhin umfasst das mobile Endgerät 102 eine Prozessoreinheit 114, die mit einer Anzeigeeinrichtung 116, einer Eingabeeinrichtung 118, und einem Speicher 120 verbunden ist. Der Speicher 120 verfügt über einen flüchtigen und nicht-flüchtigen Speicherbereich. Die Anzeigeeinrichtung 116 ist beispielsweise als ein Display ausgestaltet und wird durch die Prozessoreinheit 114 gesteuert. Bei der Eingabeeinrichtung 118 handelt es sich vorzugsweise um eine Tastatur, die eine Mehrzahl von Eingabetasten aufweist.

Ferner umfasst das mobile Endgerät 102 eine Clienteinrichtung zur Wiedergabe von Inhalten. Die Clienteinrichtung ist vorzugsweise als ein Softwareprogramm ausgeführt, welches in dem Speicher 120 des mobilen Endgeräts 102 gespeichert ist und auf der Prozessoreinrichtung 114 ausgeführt wird. Die Software kann über die Luftschnittstelle 112 oder über eine andere Schnittstelle auf das mobile Endgerät 102 übertragen werden.

Die Clienteinrichtung stellt eine grafische Benutzerschnittstelle zur Darstellung von Inhalten bereit, die von dem Server 110 über das Netzwerk 104, 106 108 an das mobile Endgerät 102 übermittelt werden. Die Inhalte umfassen Text-, Bild, Audio- und/oder Videodaten, betreffend einen Sportwettbewerb, den der Nutzer auf dem mobilen Endgerät 102 im Wesentlichen in Echtzeit verfolgen kann. Im Folgenden wird dabei beispielshaft eine Ausführungsform der Clienteinrichtung beschrieben, mit der ein Fußballwettbewerb im Wesentlichen im Wesentlichen in Echtzeit verfolgt werden kann. Hierbei handelt es sich beispielsweise um einen Ligawettbewerb, bei dem in einer Spielsaison ein Wettbewerbssieger in einer Mehrzahl von Fußballbegegnungen aus den an der Liga teilnehmenden Mannschaften ermittelt wird. An vorgegebenen Spieltagen der Spielsaison findet dabei eine Mehrzahl von Begegnungen statt. In der Regel spielt jeder Ligateilnehmer in einer Spielsaison wenigstens einmal gegen jeden der übrigen Ligateilnehmer, und an einem Spieltag nimmt jeder Ligateilnehmer an einer der stattfindenden Begegnungen teil. Die Clienteinrichtung ermöglicht es dabei, die Begegnungen eines Spieltags live zu verfolgen.

Hierfür stellt die Clienteinrichtung eine grafische Benutzeroberfläche bereit, die an der Anzeigeeinrichtung des mobilen Endgeräts 102 dargestellt werden kann. Die grafische Benutzeroberfläche umfasst eine Mehrzahl von Masken, in denen die von dem Server 110 übermittelten Inhalte dargestellt werden. Der Aufbau der Masken ist vorzugsweise fest vorgegeben, d.h. innerhalb der Clienteinrichtung in dem mobilen Endgerät 102 gespeichert. Insbesondere stellt die Clienteinrichtung dabei eine Bibliothek mit Vorlagen für die verschiedenen vorgesehenen Masken bereit. In der Vorlage einer Maske sind die Bereiche der Maske vorgegeben, die mit Inhalten gefüllt werden können, die von dem Server 110 an das mobile Endgerät 102 übermittelt werden. Vorzugsweise sind in den Vorlagen die Positionen der Bereiche innerhalb der Masken sowie deren Größe vorgegeben. Die Inhalte umfassen je nach Bereich Text-, Bild- oder Videodaten. Ferner können die Bereiche Datenstrukturen umfassen, für deren Darstellung ebenfalls Vorlagen in dem mobilen Endgerät 102 gespeichert sind. Insbesondere können dabei Listen bzw. Tabellen in Bereichen von Masken dargestellt werden. Die Darstellungen der Listen, insbesondere die Größe der Listeneinträge und die in den Listeneinträgen enthaltenen Felder sowie deren Größe und Position innerhalb eines Listeneintrags sind gleichfalls in dem mobilen Endgerät 102 in Form von Vorlagen gespeichert.

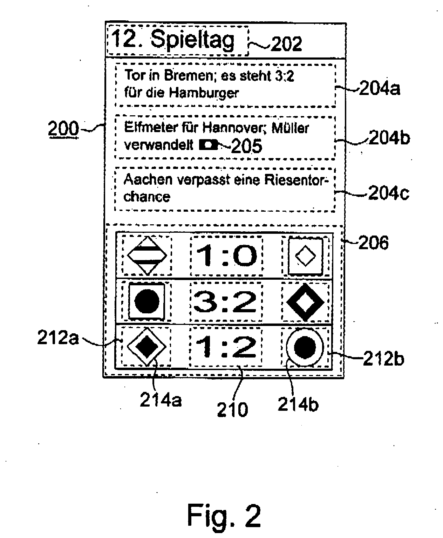

Es sei an dieser Stelle darauf hingewiesen, dass bei den in den Figuren 2 bis 7 schematisch dargestellten Masken enthalten, die durch die Vorlagen vorgegebenen Bereiche und Felder der Masken bzw. Listen gestrichelt umrahmt sind, die mit Inhalten gefüllt werden, die von dem Server 110 an das mobile Endgerät 102 übermittelt werden.

Die Clienteinrichtung verfügt darüber hinaus über eine Programmlogik zur Steuerung der grafischen Benutzeroberfläche. Die Steuerung erfolgt In Abhängigkeit von Bedienaktionen, die der Nutzer mittels der Eingabeeinrichtung 118 des mobilen Endgeräts 102 vornimmt. Dabei kann der Nutzer beispielsweise durch mittels der Eingabeeinrichtung 118 vorgenommene Bedienaktionen, ausgehend von einer Maske, weitere Masken aufrufen oder Listen durchlaufen, bzw. in Listen blättern, die nicht vollständig innerhalb einer Maske an der Anzeigeeinrichtung 116 dargestellt werden können.

Die Inhalte, die innerhalb der grafischen Benutzeroberfläche der Clienteinrichtung dargestellt werden, sind in dem Server 110, beispielsweise in einer Datenbank 124 gespeichert. Die Inhalte umfassen Informationen zu den aktuell stattfindenden Begegnungen des Fußballwettbewerbs, sowie allgemeine Informationen betreffend den Fußballwettbewerb. Beispiele für derartige Inhalte werden im Folgenden noch erläutert. Innerhalb der Datenbank 124 des Servers sind die Inhalte zusammen mit Angaben über die Masken und den Maskenbereiche, in denen sie innerhalb der grafischen Benutzeroberfläche der Clienteinrichtung dargestellt werden, hinterlegt. Die Inhalte, die innerhalb der grafischen Benutzeroberfläche in Listen dargestellt werden sollen, sind gleichfalls unter entsprechenden Angaben in dem Server 110 gespeichert, die von der Clienteinrichtung herangezogen werden, um die Listen innerhalb der grafischen Benutzeroberfläche aufzubauen.

Ferner werden die in der Datenbank 124 gespeicherten Inhalte fortlaufend gepflegt, d.h. bestehende Informationen werden im Wesentlichen in Echtzeit durch aktualisierte Informationen ersetzt. Dies geschieht insbesondere während der Fußballbegegnungen. Dabei werden insbesondere die Spielstände der Begegnungen, Statistiken der Begegnungen, sowie Meldungen und Nachrichten fortwährend aktualisiert.

Wenn die Clienteinrichtung auf dem mobilen Endgerät 102 von dem Nutzer des mobilen Endgeräts 102 gestartet wird, dann steuert die Clienteinrichtung den Aufbau einer Datenverbindung zwischen dem mobilen Endgerät 102 und dem Server 110, die über das Netzwerk 104, 106, 108 hergestellt wird. Nach der Herstellung der Datenverbindung werden dann alle in der Datenbank 124 aktuell vorliegenden Inhalte von dem Server 110 an das mobile Endgerät 102 übermittelt und in dem Speicher 120 des mobilen Endgeräts 102 gespeichert. In dem Speicher 120 des mobilen Endgeräts 102 liegt dann quasi eine Kopie der Datenbank 124 des Servers 110 vor. Ferner wird vorzugsweise eine so genannte Sitzung (Session) zwischen dem Server 120 und dem mobilen Endgerät 102 etabliert, so dass nach dem Aufbau der Datenverbindung eine stehende Verbindung zwischen dem mobilen Endgerät 102 und dem Server 120 besteht. Im Rahmen der Sitzung können dann Aktualisierungen der Inhalte von dem Server 120 an das mobile Endgerät 102 bzw. die Clienteinrichtung übertragen werden.

Da es sich bei dem Inhalt der Datenbank 124 um eine nicht unerhebliche Datenmenge handelt, dauert die Übertragung der aktuell in der Datenbank 124 vorliegenden Inhalte eine bestimmte Zeit. Während der Dauer der Übertragung wird vorzugsweise eine Startanzeige an der Anzeigeeinrichtung 116 des mobilen Endgeräts 102 angezeigt, die beispielsweise eine Animation umfasst. Hierdurch wird erreicht, dass die Wartezeit bis zur vollständigen Übertragung der Inhalte für den Nutzer des mobilen Endgeräts 102 subjektiv verkürzt bzw. interessanter gestaltet wird.

Nachdem die in der Datenbank 124 vorliegenden Inhalte an das mobile Endgerät 102 übertragen und in dem Speicher 120 des mobilen Endgeräts 102 gespeichert worden sind, wird von der Clienteinrichtung in einer Ausführungsform eine erste Maske der grafischen Benutzeroberfläche aufgebaut. Hierbei handelt es sich um eine Einstiegsmaske einer von mehreren Rubriken, in welche die bereitgestellten Inhalte unterteilt werden.

Ein Wechsel zwischen den Rubriken kann vorzugsweise über ein Hauptmenü der grafischen Benutzeroberfläche vorgenommen werden. Das Hauptmenü kann durch eine Betätigung der Eingabeeinrichtung 118 des mobilen Endgeräts vorzugsweise ausgehend von jeder Maske der grafischen Benutzeroberfläche aus 102 aufgerufen werden. Einer Taste der Eingabeeinrichtung 118 ist dabei der Aufruf des Hauptmenüs zugeordnet, wenn die Clienteinrichtung aktiv ist. Mithilfe von Navigationstasten der Eingabeeinrichtung 118 kann der Nutzer die Menüpunkte des Hauptmenüs aufrufen. Dabei ist jeder vorgesehenen Rubrik ein Menüpunkt zugeordnet. Bei einer Auswahl des Menüpunkts wird die Einstiegsmaske dieser Rubrik an der Anzeigeeinrichtung 116 des mobilen Endgeräts 102 dargestellt.

Die vorgesehenen Rubriken umfassen in einer beispielhaften Ausgestaltung der Clienteinrichtung eine Begegnungsrubrik mit Informationen über die aktuell stattfindenden Begegnungen des Fußballwettbewerbs, eine Tabellenrubrik mit Informationen über den aktuellen Tabellenstand in dem Fußballwettbewerb und eine Nachrichtenrubrik mit allgemeinen Nachrichten, betreffend den Fußballwettbewerb.

Nachdem die Inhalte in der zuvor beschriebenen Weise von dem Server 110 an das mobile Endgerät 102 übertragen und in dem Speicher 120 des mobilen Endgeräts 102 gespeichert worden sind, wird von der Clienteinrichtung beispielsweise die Einstiegsmaske der Begegnungsrubrik aufgebaut und an der Anzeigeeinrichtung 116 des mobilen Endgeräts 102 dargestellt. Gleichfalls kann jedoch auch die Darstellung einer anderen Maske vorgesehen sein.

Eine Ausgestaltung der Einstiegsmaske der Begegnungsrubrik ist beispielhaft in der Figur 2 dargestellt, wobei die Einstiegsmaske als Ganzes mit der Bezugsziffer 200 versehen ist. Die Maske umfasst einen Kopfbereich 202, in dem der aktuelle Spieltag des Fußballwettbewerbs angegeben ist. Ferner sind mehrere Meldungsbereiche 204a, 204b, 204c und ein Listenbereich 206 vorgesehen. Die Positionen der Bereiche sind innerhalb der in der Clienteinrichtung enthaltenen Vorlage der Maske 200 vorgegeben, und die Bereiche werden mit den Daten gefüllt, die in den von dem Server 110 übertragenen Inhalten enthalten und für die Darstellung in den Bereichen vorgesehen sind.

Die Meldungsbereiche 204a, 204b, 204c entsprechen beispielsweise einem so genannten Live-Ticker, in dem Meldungen zu Ereignissen bei den aktuell stattfindenden Fußballbegegnungen angezeigt werden. Vorzugsweise werden die Meldungen während der Fußballbegegnungen fortlaufend aktualisiert, wenn ausgewählte Ereignisse stattfinden. Hierzu wird beim Auftreten eines Ereignisses eine neue Meldung in der Datenbank 124 des Servers 110 erzeugt und an das mobile Endgerät 102 übertragen. Dabei kann es beispielsweise vorgesehen sein, dass aufgrund der Übertragung einer neuen Meldung die in dem untersten Meldungsbereich 204c enthaltene Meldung gelöscht wird und die in den beiden oberen Meldungsbereichen 204a, 204b enthaltenen Meldungen um jeweils einen Bereich nach unten verschoben werden, so dass die neue Meldung in dem oberen Meldungsbereich 204a dargestellt wird. Hierdurch ist die neueste Meldung jeweils in dem obersten Meldungsbereich 204a enthalten.

Dabei kann es vorgesehen sein, dass den Meldungen Bild- und/oder Videodaten zugeordnet sind, die von dem Server 110 an das mobile Endgerät 102 übertragen werden. So können etwa einer Meldung über ein Tor, das in einer Begegnung gefallen ist, Bild- und/oder Videodaten des Torschusses zugeordnet werden. Das Vorhandensein einer Meldung zugeordneter Bild- und/oder Videodaten kann beispielsweise durch ein Symbol 205 angezeigt werden. Mittels der Eingabeeinrichtung 118 kann der Nutzer eine Meldung mit zugeordneten Bild- und/oder Videodaten auswählen. Aufgrund der Auswahl werden die Bild- und/oder Videodaten an der Anzeigeinrichtung 116 des mobilen Endgeräts 102 wiedergegeben. Durch eine weitere Bedienaktion an der Eingabeeinrichtung 118 während der Wiedergabe der Bild- und/oder Videodaten kann der Nutzer die Maske 200 wieder aufrufen.

Eine von dem Server 110 an das mobile Endgerät 102 übertragene Meldung, der Bild- und/oder Videodaten zugeordnet sind, wird dabei erst dann in einem Meldungsbereich 204a, 204b, 204c der Maske 200 angezeigt, wenn die zugeordneten Bild- und/oder Videodaten ebenfalls von dem Server 110 an das mobile Endgerät 102 zumindest teilweise übertragen worden sind. Hierzu wird die Anzeige der Meldung in einem Meldungsbereich 204a, 204b, 204c gegebenenfalls verzögert, bis ein vorgegebener Teil der Bild- und/oder Videodaten in dem mobilen Endgerät 102 empfangen worden ist. Hierdurch können die Bild- und/oder Videodaten im Wesentlichen unmittelbar nach dem Aufrufen der Meldung durch den Nutzer des mobilen Endgeräts 102 an der Anzeigeeinrichtung 116 dargestellt werden.

In einer Ausgestaltung erfolgt die Anzeige der Meldung erst dann, wenn die der Meldung zugeordneten Bild- und/oder Videodaten vollständig in dem mobilen Endgerät 102 empfangen worden sind. Insbesondere bei Videodaten kann es jedoch in einer weiteren Ausgestaltung vorgesehen sein, dass die Meldung bereits angezeigt wird, wenn erst ein vorgegebener Anteil der Videodaten in dem mobilen Endgerät 102 empfangen worden ist. Wenn der Nutzer des mobilen Endgeräts 102 die Meldung auswählt, bevor die Videodaten vollständig an das mobile Endgerät 102 übertragen worden sind, so wird aufgrund der Auswahl der Meldung der bereits empfangene Anteil der Videodaten an der Anzeigeeinrichtung 116 zur Anzeige gebracht. Der restliche Anteil der Videodaten kann dann während der Wiedergabe in dem mobilen Endgerät 102 empfangen und im Anschluss an den bereits empfangenen Anteil angezeigt werden. Die Ausgestaltung hat den Vorteil, dass die Meldung rascher angezeigt werden kann und damit eine höhere Aktualität hat.

In dem Listenbereich 206 der Maske 200 wird eine Liste mit den aktuell stattfindenden Begegnungen des Fußballwettbewerbs dargestellt. Aufgrund der typischerweise relativ geringen Größe der Anzeigeeinrichtung 116 des mobilen Endgeräts 102 können dabei in der Regel nicht alle Listeneinträge angezeigt werden. Daher ist es vorgesehen, dass die Liste in dem Listenbereich 206 ausschnittsweise dargestellt wird und mittels der Eingabeeinrichtung 118 in der Liste geblättert werden kann, um den dargestellten Ausschnitt der Liste zu verändern.

Ein Listeneintrag 208 der in dem Listenbereich 206 dargestellten Liste umfasst in der dargestellten Ausgestaltung der Maske 200 ein Feld 210 zur Darstellung des aktuellen Spielstands einer Begegnung sowie Felder 212a, 212b zur Angabe der Teilnehmer der betreffenden Begegnung, d.h. der an der Begegnung teilnehmenden Mannschaften. Die Angaben der Spielstände der Begegnungen werden bei einer Veränderung anhand von Aktualisierungen, die von dem Server 110 an das mobile Endgerät 102 übertragen werden, angepasst. Vorzugsweise wird bei einer Veränderung eines Spielstands einer Begegnung auch eine in den Meldungsbereichen 204a, 204b, 204c darzustellende Meldung an das mobile Endgerät 102 übertragen. Dabei wird der Spielstand in der Liste vorzugsweise erst dann angepasst, wenn diese Meldung in einem der Meldungsbereiche 204a, 204b, 204c angezeigt wird. Hierdurch wird vermieden, dass der Benutzer, wenn er eine Veränderung eines Spielstands bemerkt, auf eine entsprechende Meldung warten muss.

Vorzugsweise werden die Teilnehmer der Begegnungen in der Liste anhand von in den Feldern 212a, 212b enthaltenen Grafikelementen 214a, 214b identifiziert, bei denen es sich beispielsweise um die Teamlogos der Teilnehmer der Begegnung handeln kann. Diese Logos sind in der Figur 2 sowie den weiteren Figuren beispielhaft in einer rein schematisch zu verstehenden Darstellung angegeben. Eine Identifizierung der Teilnehmer der Begegnungen anhand von Grafikelementen 214a, 214b hat gegenüber über einer ebenfalls möglichen Angabe der Teilnehmer in Textform den Vorteil, dass ein geringerer Platzbedarf für die Felder 212a, 212b besteht

Die Grafikelemente 214 werden in einer Ausführungsform nicht von dem Server 110 an das mobile Endgerät 102 übertragen. Vielmehr werden die Grafikelemente bereits bei der Installation der Clienteinrichtung auf dem mobilen Endgerät 102 in dem Speicher 120 des mobilen Endgeräts 102 unter einer Kennung hinterlegt. Von dem Server 110 werden lediglich die Kennungen der Grafikelemente 214 zusammen mit den Angaben über die Felder 212a, 212b, in welchen die Grafikelemente dargestellt werden sollen, an das mobile Endgerät 102 übertragen. Auf diese Weise wird die zur Übertragung der Inhalte erforderliche Datenmenge und damit die für die Übertragung von Inhalten benötigte Zeit erheblich reduziert.

Vorzugsweise sind die Grafikelemente in dem Speicher 120 des mobilen Endgeräts 102 als Vektorgrafiken gespeichert. Hierdurch können die Grafikelemente ohne Verlust der Darstellungsqualität skaliert werden. Dies ermöglicht es, die in dem Speicher 120 gespeicherten Grafikelemente in unterschiedlich große Bereiche bzw. Felder innerhalb der grafischen Benutzeroberfläche einzufügen.

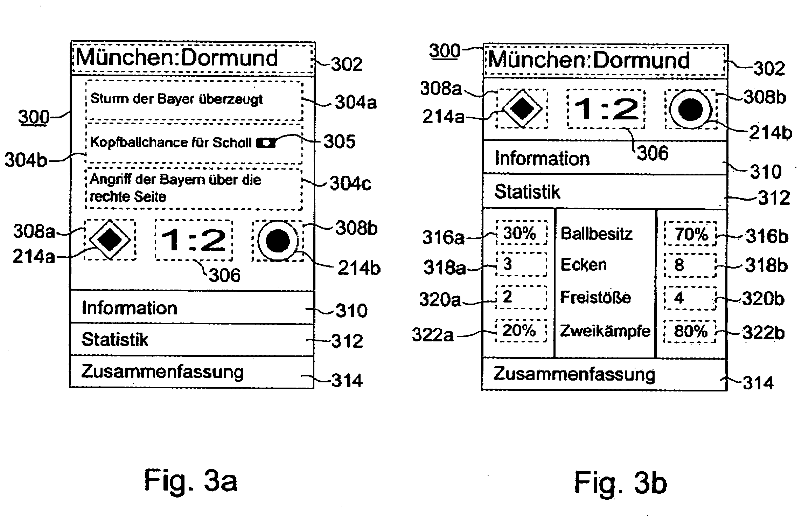

Mittels der Eingabeeinrichtung 118 des mobilen Endgeräts 102 können die Listeneinträge der in dem Listenbereich 206 dargestellten Liste ausgewählt werden, um weitere Masken der Begegnungsrubrik aufzurufen, in denen jeweils weitergehende Informationen zu den Fußballbegegnungen dargestellt werden. Eine derartige Maske, die aufgrund der Auswahl eines Listeintrags aufgerufen wird, ist beispielhaft in der Figur 3a dargestellt und in der Figur als Ganzes mit der Bezugsziffer 300 versehen. Die Maske umfasst gleichfalls Bereiche, in welche die von dem Server 110 übertragenen Inhalte dargestellt werden und deren Position und Größe in der Vorlage der Maske 300 festgelegt sind.

Insbesondere umfasst die Maske 300 einen Kopfbereich 302, in dem die Teilnehmer der Begegnung beispielsweise in Textform identifiziert werden.

Ferner umfasst die Maske 300 Meldungsbereiche 304a, 304b, 304c, in denen, ähnlich wie in den Feldern 204a, 204b und 204c der Maske 200 Meldungen angezeigt werden. Die Meldungen beschreiben Ereignisse der betreffenden Fußballbegegnung und werden fortlaufend aktualisiert. Eine Aktualisierung erfolgt dabei zunächst in der Datenbank 124 des Servers 110, wenn ein Ereignis bei der betreffenden Begegnung stattfindet, indem eine neue Meldung betreffend das Ereignis erzeugt wird. Die neue Meldung wird dann von dem Server 110 an das mobile Endgerät 102 übertragen und in der grafischen Benutzeroberfläche angezeigt. Wie bereits im Zusammenhang mit den Meldungsbereichen 204a, 204b, 204c beschrieben, wird zur Darstellung einer neuen Meldung die in dem untersten Meldungsbereich 304c enthaltene Meldung gelöscht und die in den beiden oberen Meldungsbereichen 304a, 304b enthaltenen Meldungen um jeweils einen Bereich nach unten verschoben, so dass die neue Meldung in dem oberen Meldungsbereich 304c dargestellt wird.

Die in den Meldungsbereichen 304a, 304c 304d angezeigten Meldungen können wiederum Bild- und/oder Videodaten zugeordnet sein, wobei das Vorhandensein von einer Meldung zugeordneten Bild- und/oder Videodaten beispielsweise durch ein in dem entsprechenden Meldungsbereich dargestelltes Symbol 305 symbolisiert werden kann. Falls einer neuen Meldung Bild- und/oder Videodaten zugeordnet sind, dann wird die Meldung, wie zuvor bereits im Zusammenhang mit der Maske 200 beschrieben, erst dann in einem Meldungsbereich 304a, 304b, 304c angezeigt, wenn die Bild- und/oder Videodaten zumindest teilweise von dem Server 110 an das mobile Endgerät 102 übertragen worden sind.

Darüber hinaus umfasst die Maske 300 einen Bereich 306, in dem eine Angabe des Spielstands dargestellt wird, die bei einer Veränderung des Spielstands aktualisiert wird, sowie Bereiche 308a, 308b, in denen die Grafikelemente 214a, 214b dargestellt werden, welche die an der betreffenden Begegnung teilnehmenden Mannschaften identifizieren.

Darüber hinaus umfasst die Maske 300 ein Menü mit Menüpunkten 310, 312, 314. Die Menüpunkte 310, 312, 314 sind in der Vorlage der Maske vorgegeben. Durch eine Auswahl eines Menüpunktes 310, 312, 314, die mittels der Eingabeeinrichtung 118 des mobilen Endgeräts 101 vorgenommen wird, können Inhalte aufgerufen werden, die den Menüpunkten zugeordnet sind. In der beispielhaften Darstellung in Figur 3a, sind die Menüpunkte "Information", "Statistik" und "Zusammenfassung" vorgesehen. Unter dem Menüpunkt 310 "Information" werden beispielsweise die Tore der Begegnung, die Torschützen sowie die Spielminuten in denen die Tore erzielt wurden, angegeben. Unter dem Menüpunkt 312 "Statistik" werden beispielsweise die Begegnung betreffende statistische Informationen angezeigt, und unter dem Menüpunkt 314 "Zusammenfassung" werden beispielsweise eine Zusammenfassung der Begegnung und/oder Hintergrundinformationen zu der Begegnung angegeben. Bei der Auswahl eines Menüpunktes 310, 312, 314 wird in einer Ausführungsform beispielsweise der Meldungsbereich 304 in der Maske 300 ausgeblendet und ein Bereich zur Darstellung der dem Menüpunkt zugeordneten Informationen angezeigt, während insbesondere die übrigen Menüpunkte 310, 312, 314 sichtbar bleiben. Dabei kann aufgrund der Auswahl eines Menüpunktes 310, 312, 314 eine neue Maske mit dem beschriebenen Erscheinungsbild an der Anzeigeeinrichtung angezeigt werden, oder die Maske 300 kann entsprechend verändert werden.

In Figur 3b ist beispielhaft eine veränderte Maske 300 dargestellt, die angezeigt wird, nachdem mittels der Eingabeeinrichtung 118 des mobilen Endgeräts 102 der Menüpunkt 312 "Statistik" ausgewählt worden ist. Wie erkennbar ist, wurden hier die Meldungsbereiche 304a, 304b, 304c ausgeblendet. Die Bereiche 306 sowie 308a und 308b mit den Angaben des aktuellen Spielstands der Begegnung sowie der Darstellung der die Teilnehmer der Begegnung identifizierenden Grafikelemente 214a, 214b wurden nach oben verschoben. Ferner wird unter dem Menüpunkt 312 ein Anzeigebereich dargestellt, in dem statistische Informationen zur Anzeige gebracht werden, welche die Begegnung betreffen. Die statistischen Informationen umfassen beispielsweise Angaben über die Ballbesitzanteile der Teilnehmer der Begegnung. Für diese Angaben sind Felder 316a, 316b vorgesehen, in denen die von dem Server 110 übertragenen Informationen über die Ballbesitzanteile angezeigt werden. Die Informationsangabe "Ballbesitz" wird nicht dynamisch verändert und ist daher vorzugsweise Bestandteil der Vorlage der veränderten Maske 300. Ferner werden die Anzahl der den Teilnehmern der Begegnung zugeordneten Ecken und Freistöße in Feldern 318a, 318b bzw. 320a, 320b angezeigt, sowie der prozentuale Anteil der von den Teilnehmern der Begegnung gewonnenen Zweikämpfe in Felder 322a, 322b. Diese Angaben werden vorzugsweise ereignisbezogen aktualisiert. Insbesondere erfolgt eine Aktualisierung in der Datenbank 124 immer dann, wenn einem Teilnehmer ein Eckball oder ein Freistoß zugesprochen wird oder wenn ein Teilnehmer einen Zweikampf gewonnen hat. Nach der Übertragung der Aktualisierungen von dem Server 110 an das mobile Endgerät 102 werden die Aktualisierungen in die entsprechenden Felder der Maske 300 eingetragen, wobei die bestehenden Angaben durch die aktualisierten ersetzt werden.

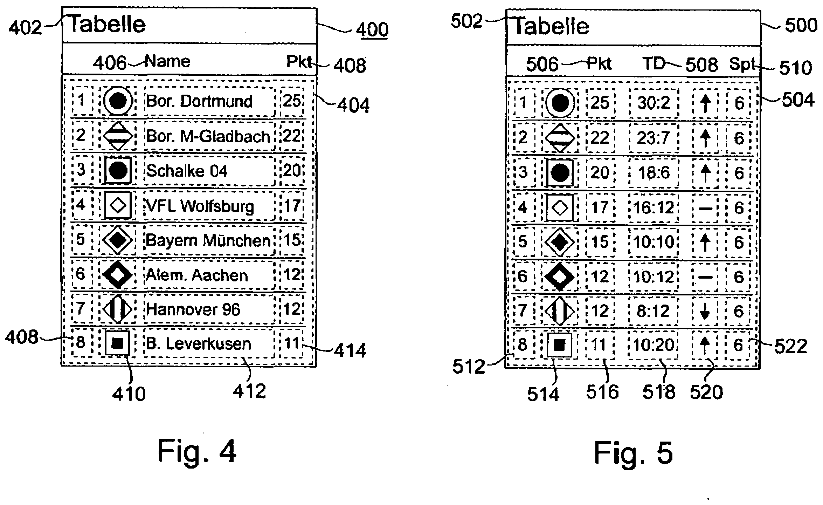

Bei einer Auswahl der Tabellenrubrik in dem Hauptmenü der grafischen Benutzeroberfläche der Clienteinrichtung wird eine Einstiegsmaske der Tabellenrubrik an der Anzeigeeinrichtung 116 des mobilen Endgeräts 102 dargestellt. Eine beispielhafte Ausgestaltung der Einstiegsmaske der Tabellenrubrik ist in Figur 4a dargestellt. Die Maske weist eine Überschrift 402 mit dem Wortlaut "Tabelle" auf, die nicht verändert wird und somit vorzugsweise fest in der Vorlage der Maske 400 gespeichert ist. Ferner umfasst die Maske 400 einen Listenbereich 404, in dem eine Darstellung der Tabelle des Fußballwettbewerbs angezeigt wird. Über dem Listenbereich 404 können Überschriften von Spalten der Liste fest in der Vorlage der Maske 400 vorgegeben sein, wie beispielsweise die Überschrift 406 ("Name") zur Kennzeichnung der Spalte der Tabelle, in der die Namen der Teilnehmer des Fußballwettbewerbs angegeben sind, sowie die Überschrift 408 ("Pkt") zur Kennzeichnung der Spalte der Tabelle, in der die von den Teilnehmern in dem Fußballwettbewerb erzielten Punkte angezeigt werden.

Der Listenbereich 404 enthält eine Liste mit jeweils einem Listeneintrag für jeden Teilnehmer des Fußballwettbewerbs, wobei die Liste entsprechend der Platzierung der Teilnehmer in dem Wettbewerb geordnet ist, welche sich aus den von den Teilnehmern erzielten Punkten ergibt. Ein Listeneintrag 406 umfasst beispielsweise ein Feld 408 mit einer Angabe der Platzierung des Teilnehmers, dem der Listeneintrag zugeordnet ist, ein Feld 410 mit einer Darstellung des den Teilnehmer identifizierenden Grafiksymbols, ein Feld 412, in dem die Bezeichnung des Teilnehmers im Textformat angezeigt wird, und ein Feld 414, in dem die von dem Teilnehmer erzielte Punktzahl angegeben wird.

In dem Listenbereich 404 kann die Liste bzw. Tabelle des Wettbewerbs aufgrund der relativ geringen Größe der Anzeigeeinrichtung in der Regel nur ausschnittsweise dargestellt werden. Daher kann mittels der Eingabeeinrichtung 118 des mobilen Endgeräts 102 in der Liste geblättert werden, um den in dem Listenbereich 404 der Maske 400 dargestellten Ausschnitt der Liste zu verändern.

Vorzugsweise kann zudem durch eine während der Anzeige der Tabelle 402 vorgenommene Bedienaktion eine weitere Maske aufgerufen werden, die in Figur 5 beispielhaft veranschaulicht und als Ganzes mit der Bezugsziffer 500 versehen ist. Die Maske 500 weist ebenfalls die fest in der Vorlage der Maske 500 gespeicherte Überschrift 502 mit dem Wortlaut "Tabelle" auf. Ferner enthält die Maske 500 einen Listenbereich 504, in dem gleichfalls die Tabelle des Fußballwettbewerbs dargestellt ist. Die in dem Listenbereich 504 dargestellte Tabelle enthält jedoch im Gegensatz zu der in dem Listenbereich 404 der Maske 400 dargestellten Tabelle Detailinformationen zu dem Tabellenstand. Über dem Listenbereich 504 können wiederum Überschriften von Spalten der Liste bzw. Tabelle fest in der Vorlage der Maske 500 vorgegeben sein, wie beispielsweise die Überschrift 506 ("Pkt") zur Kennzeichnung der Spalte der Tabelle, in der die von den Teilnehmern in dem Fußballwettbewerb erzielten Punkte angezeigt werden, die Überschrift 508 ("TD") zur Kennzeichnung der Spalte, in der das Torverhältnis der Teilnehmer des Wettbewerbs angegeben wird, sowie die Überschrift 510 ("Spt") zur Kennzeichnung der Spalte, in der die Anzahl der von den Teilnehmern während des Fußballwettbewerbs absolvierten Spiele bzw. Spieltage angegeben wird. Jeder Listeneintrag der in dem Listenbereich 504 angegebenen Liste umfasst ein Feld 512, in dem die Platzierung des Teilnehmers angezeigt wird, dem der Listeneintrag zugeordnet ist, sowie ein Feld 514, in dem das den Teilnehmer identifizierende Grafiksymbol dargestellt wird. In einem weiteren Feld 516 wird die von dem Teilnehmer in dem Wettbewerb erzielte Punktzahl angezeigt. Die Punktzahl ergibt sich beispielsweise aus den in dem Wettbewerb erzielten Siegen, Niederlagen und Remisen, die jeweils mit einer vorgegebenen Punktzahl bewertet werden. Ein weiteres Feld 518 eines Listeneintrags ist zur Darstellung des Torverhältnisses des Teilnehmers vorgesehen, d.h. dem Verhältnis zwischen den in dem Wettbewerb erzielten Toren und den Gegentoren. So bedeutet beispielsweise ein Torverhältnis von 18:6, dass der Teilnehmer in dem Wettbewerb 18 Tore erzielt hat und 6 Gegentore hinnehmen musste. Zudem ist ein Feld 520 vorgesehen, in dem anhand eines Symbols angegeben wird, ob sich die Platzierung des Teilnehmers im Vergleich zu dem vorangegangenen Spieltag verbessert hat (nach oben gerichteter Pfeil), verschlechtert hat (nach unten gerichteter Pfeil) oder nicht verändert hat (waagerechter Strich). In dem Feld 522 werden ferner die von dem Teilnehmer in dem Wettbewerb absolvierten Spiele angegeben.

Die in den beschriebenen Feldern der Masken 400 und 500 angegebenen Informationen hinsichtlich des Tabellenstandes werden vorzugsweise aktualisiert, während die Begegnungen stattfinden. Dabei ist eine Aktualisierung immer dann erforderlich, wenn ein Teilnehmer in einer Begegnung ein Tor erzielt, da sich in diesem Fall die Punktezahl der Teilnehmer der Begegnung, ihr Torverhältnis sowie möglicherweise ihre Platzierung in der Tabelle verändert. Die Aktualisierung erlaubt es dem Nutzer des mobilen Endgeräts 102 stets, den aktuellen Tabellenstand in dem Wettbewerb einzusehen. Die Aktualisierung erfolgt zunächst in der Datenbank 124 des Servers 110. Die aktualisierten Daten werden dann von dem Server 110 an das mobile Endgerät 102 übertragen. Nach dem Empfang der aktualisierten Daten werden dann die bestehenden Daten durch die aktualisierten ersetzt.

In einer Ausgestaltung der Clienteinrichtung kann es darüber hinaus vorgesehen sein, dass die Listeneinträge der in den Listenbereichen 404 und 504 der Masken 400 und 500 mittels der Eingabeeinrichtung 118 des mobilen Endgeräts 102 auswählbar sind. Aufgrund der Auswahl eines Listeneintrags können dabei Inhalte in einer oder mehreren weiteren Masken angezeigt werden, die Informationen über den Wettbewerbsteilnehmer umfassen, dem der Listeneintrag zugeordnet ist. Diese Informationen umfassen beispielsweise die Mannschaftsaufstellung des Teilnehmers während des aktuellen Spiels, detaillierte Informationen über die Bilanz des Teilnehmers in dem Fußballwettbewerb. Ferner können beispielsweise Videos mit Szenen aus den vorangegangenen Spielen des Teilnehmers angezeigt werden. Da diese Inhalte bereits beim Start der Clienteinrichtung in der oben beschriebenen Weise in dem Speicher 120 des mobilen Endgeräts 102 gespeichert worden sind, können die Inhalte im Wesentlichen unmittelbar nach ihrer Auswahl durch den Nutzer an der Anzeigeeinrichtung des mobilen Endgeräts 102 dargestellt werden und müssen nach der Auswahl insbesondere nicht erst von dem Server 110 an das mobile Endgerät 102 übertragen werden.

Von den verschiedenen Bestandteilen der zuvor beschriebenen Inhalte, die von dem Server 110 an das mobile Endgerät 102 übertragen werden und in den Bereichen und Feldern der Masken der grafischen Benutzeroberfläche dargestellt werden, sind einige miteinander verknüpft. Insbesondere besteht dabei eine Verknüpfung zwischen Bestandteilen der Inhalte, die Aktualisierungen unterworfen sind, die aufgrund von Ereignissen während der Fußballbegegnungen oder periodisch vorgenommen werden.

So wird beispielsweise dann, wenn ein Tor während einer Begegnung fällt, eine Meldung in einem der Meldungsbereiche 204a, 204b, 204c der Einstiegsmaske 200 der Begegnungsrubrik angezeigt. Eine weitere Meldung wird in einem der Meldungsbereiche 304a, 304b, 304c der Maske 300 angezeigt, die der betreffenden Begegnung zugeordnet ist. Den Meldungen können, wie zuvor beschrieben, zudem Bild- und/oder Videodaten zugeordnet werden, die durch eine Auswahl der Meldungen an der Anzeigeeinrichtung 116 des mobilen Endgeräts zur Anzeige gebracht werden können. Ferner verändert sich der Spielstand der Begegnung der in dem Listenbereich 206 der Einstiegsmaske 200 der Begegnungsrubrik sowie in dem Bereich 306 der der Begegnung zugeordneten Maske 300 angezeigt wird. Darüber hinaus verändern sich, wie zuvor beschrieben, die Tabelleninformationen, die in den Listenbereichen 404 und 504 der Masken 400 und 500 der Tabellenrubrik angezeigt werden.

Ferner kann beispielsweise bei einem Eckball oder einem Freistoß in einer Begegnung eine entsprechende Meldung in einem der Meldungsbereiche 204a, 204b, 204c der Einstiegsmaske 200 der Begegnungsrubrik angezeigt werden. Eine weitere Meldung kann in einem der Meldungsbereiche 304a, 304b, 304c der Maske 300 angezeigt werden, die der betreffenden Begegnung zugeordnet ist. Den Meldungen können gleichfalls Bild- und/oder Videodaten zugeordnet werden. Ferner werden beispielsweise die Informationen unter Menüpunkt 312 "Statistik" der der Begegnung zugeordneten Maske 300 aktualisiert, wenn ein Eckball oder ein Freistoß einem Teilnehmer einer Begegnung zugesprochen worden ist.

In einer Ausgestaltung ist es vorgesehen, dass Aktualisierungen von miteinander verknüpften Bestandteilen der Inhalte innerhalb der Masken der grafischen Benutzeroberfläche erst dann vorgenommen werden, wenn die Aktualisierungen aller miteinander verknüpften Bestandteile der Inhalte von dem Server 110 zu dem mobilen Endgerät 102 übertragen worden sind. Falls diesen Inhalten zusätzlich Bild- und/oder Videodaten zugeordnet sind, dann werden die Aktualisierungen innerhalb der Masken der grafischen Benutzeroberfläche, wie zuvor bereits beschrieben, zudem erst dann vorgenommen, wenn die Bild- und/oder Videodaten zumindest teilweise von dem Server 110 an das mobile Endgerät 102 übertragen worden sind.

Um dies zu erreichen sind miteinander verknüpfte Bestandteile der Inhalte, die von dem Server 110 an das mobile Endgerät 102 übermittelt werden, vorzugsweise als solche gekennzeichnet.

In einer Ausführungsform werden die Inhalte in aufeinander folgenden Datenpaketen von dem Server 110 an das mobile Endgerät 102 gesendet. In dieser Ausführungsform kann die Kennzeichnung beispielsweise dadurch erfolgen, dass die Datenpakete mit einem Zählerwert versehen werden, der beim ersten Datenpaket der miteinander verknüpften Datenpakete den Wert "Eins" annimmt, und für die nachfolgenden Datenpakete sukzessive um Eins erhöht wird. Ferner wird in jedem Datenpaket die Gesamtanzahl der miteinander verknüpften Datenpakete angegeben. Somit erkennt die Clienteinrichtung beim Empfang der Datenpakete, ob es sich um das letzte der miteinander verknüpften Datenpakete handelt oder ob weitere Datenpakte folgen, die mit den bereits empfangenen verknüpft sind.

Erst wenn die Aktualisierungen aller oder eines vorgegebenen Teils miteinander verknüpfter Bestandteile der Inhalte in dem mobilen Endgerät 102 empfangen worden sind, werden die Bereiche und Felder der Masken der grafischen Benutzeroberfläche aktualisiert. Hierdurch wird erreicht, dass in allen Masken der grafischen Benutzeroberfläche konsistente Informationen angezeigt werden, und dass beim Aufrufen einer Maske, ausgehend von einer zuvor dargestellten Maske, bereits die aktualisierten Informationen, die sich auf aktualisierte Informationen der zuvor dargestellten Maske beziehen, vorhanden sind und nicht erst von dem Server 110 an das mobile Endgerät 102 übertragen werden müssen.

Beim Start der Clienteinrichtung wird ein rascher Zugriff auf Informationen, die in Folgemasken dargestellt werden, dadurch sichergestellt, dass der Inhalt der Datenbank 124 vollständig von dem Server 110 an das mobile Endgerät 102 übertragen wird, bevor die grafische Benutzeroberfläche bzw. eine Maske der grafischen Benutzeroberfläche angezeigt wird.

Die Aktualisierungen erfolgen, wie beschrieben, zunächst in der Datenbank 124 des Servers 110, und werden dann an das mobile Endgerät 102 übermittelt. In einer vorteilhaften Ausführungsform der Erfindung geschieht dies im Rahmen eines Push-Verfahrens, d.h. der Server 110 veranlasst die Übertragung der Aktualisierungen an das mobile Endgerät. Um eine hohe Aktualität der an der grafischen Benutzeroberfläche dargestellten Inhalte zu gewährleisten, werden Aktualisierungen dabei vorzugsweise im Wesentlichen unmittelbar nach der Aktualisierung der Datenbank 124, von dem Server 110 an das mobile Endgerät 102 gesendet.

Gleichfalls kann jedoch auch ein Pull-Verfahren zur Übertragung der Aktualisierungen vorgesehen sein. In dieser Ausgestaltung sendet das mobile Endgerät 102, gesteuert durch die Clienteinrichtung, in regelmäßigen Zeitabständen Anfragen zur Übertragung von Aktualisierungen an den Server 100. Beim Empfang einer derartigen Anfrage prüft der Server 110, ob aktualisierte Inhalte in der Datenbank vorliegen, d.h., ob seit der letzten Übertragung von aktualisierten Inhalten an das mobile Endgerät 102 Veränderungen in den Inhalten der Datenbank 124 vorgenommen worden sind. Um dies zu ermitteln, werden die Veränderungen beispielsweise zusammen mit einer Zeitangabe in der Datenbank 124 gespeichert. Ferner überträgt das mobile Endgerät 102 zusammen mit einer Anfrage die Zeitangabe der vorangegangenen Übertragung von Inhalten von dem Server 110 an das mobile Endgerät 102 oder diese Zeitangabe wird in dem Server 110 hinterlegt. Durch einen Vergleich der Zeitangabe der vorangegangenen Übertragungen mit den Zeitangaben, die den Inhalten der Datenbank 124 zugeordnet sind, werden in dem Server 110 dann die an das mobile Endgerät 102 zu sendenden Aktualisierungen ermittelt.

Die Aktualisierungen, die von dem Server 110 an das mobile Endgerät 102 übertragen werden, enthalten, wie auch die Inhalte, die beim Start der Clienteinrichtungen übertragen werden, Angaben über die Bereiche und Felder der Masken der grafischen Benutzeroberfläche, in denen die Inhalte dargestellt werden sollen. Beim Empfang der aktualisierten Inhalte löscht die Clienteinrichtung beispielsweise die entsprechenden in dem Speicher 120 des mobilen Endgeräts 120 gespeicherten Inhalte dieser Bereiche und Felder, Dies geschieht jedoch, wie zuvor beschrieben, erst dann, wenn miteinander verknüpfte Bestandteile der Inhalte vollständig oder zu einem vorgegebenen Anteil in der Clienteinrichtung empfangen worden sind.

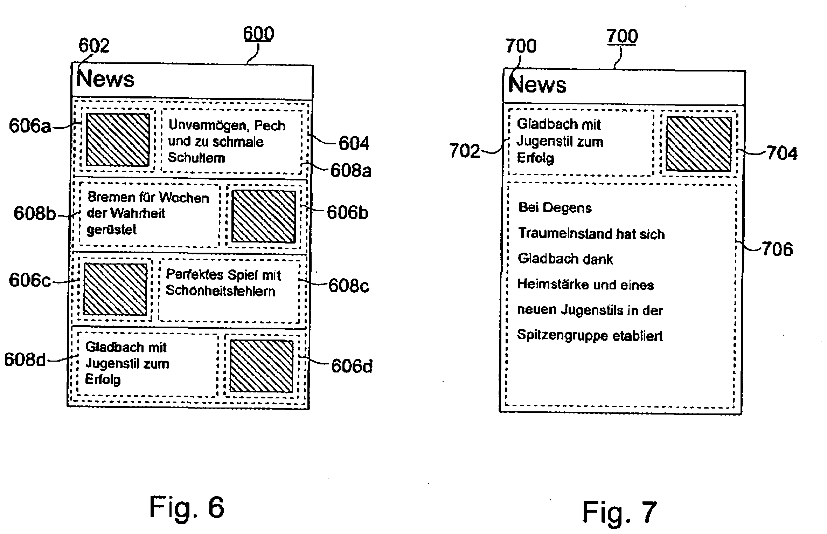

Neben der zuvor beschriebenen Begegnungsrubrik und der Tabellenrubrik umfasst die Clienteinrichtung, wie oben erwähnt, zudem eine Nachrichtenrubrik, die mittels der Eingabeeinrichtung 118 über das Hauptmenü der grafischen Benutzeroberfläche der Clienteinrichtung auswählbar ist. Aufgrund einer Auswahl der Nachrichtenrubrik wird eine Maske an der Anzeigeeinrichtung 116 des mobilen Endgeräts 102 dargestellt, in der insbesondere Überschriften von Nachrichten zu dem Fußballwettbewerb angezeigt werden. Eine derartige Maske ist beispielhaft in Figur 6 dargestellt und dort als Ganzes mit der Bezugsziffer 600 versehen. Die Maske 600 weist eine Überschrift 602 auf, die beispielsweise "News" lautet und in der Vorlage der Maske 600 enthalten ist. Ferner umfasst die Maske 600 einen Listenbereich 604, in dem eine Liste der verfügbaren Nachrichten angezeigt wird. In Figur 6 sind dabei beispielhaft vier Listeneinträge dargestellt. Aufgrund der relativ geringen Größe der Anzeigeeinrichtung 116 bzw. der Zahl an verfügbaren Nachrichten wird die Liste in dem Listenbereich 604 nur ausschnittsweise dargestellt. Mittels der Eingabeeinrichtung 118 kann in der Liste geblättert werden, um den angezeigten Ausschnitt der Liste zu verändern. Jeder Listeneintrag umfasst vorzugsweise Felder 606a, 606b, 606c, 606d, in denen jeweils ein der betreffenden Nachricht zugeordnetes Bild enthalten ist, das in Figur 6 nur schematisch dargestellt ist. Zur Darstellung der Überschrift der Nachricht umfasst jeder Listeneintrag ein Feld 608a, 608b, 608c, 608d. Wie auch in Figur 6 dargestellt, müssen die Felder 606a, 606b, 606c, 606d einerseits und die Felder 608a, 608b, 608c, 608d andererseits nicht untereinander angeordnet sein. Vielmehr kann die Reihenfolge der Felder in den Listeneinträgen wechseln, um die Übersichtlichkeit der Liste zu erhöhen.

Anhand der Überschriften der Nachrichten und der zugehörigen Bilder kann der Nutzer des mobilen Endgeräts 102 Nachrichten identifizieren, die ihn interessieren. Durch eine Auswahl des entsprechenden Listeneintrags, die mittels der Eingabeeinrichtung 118 des mobilen Endgeräts 102 vorgenommen wird, kann eine Nachricht angezeigt werden. Hierzu wird für jede Nachricht eine weitere Maske aufgerufen. Eine derartige Maske zur Darstellung einer Nachricht ist in Figur 7 beispielhaft dargestellt und als Ganzes mit der Bezugsziffer 700 versehen. Diese Maske 700 weist eine Überschrift 702 auf, die gleichfalls "News" lauten kann und in der Vorlage der Maske 700 enthalten ist. Ferner umfasst die Maske 700 einen Bereich 702, in dem die Überschrift der Nachricht angezeigt wird, die bereits in der Maske 600 dargestellt worden ist, sowie einen Bereich 704, in dem das der Nachricht zugeordnete Bild dargestellt wird, das ebenfalls bereits in der Maske 600 enthalten war. In einem weiteren Bereich 706 wird die Nachricht als Text dargestellt.

In der Datenbank 124 des Servers 110 können gespeicherte Nachrichten durch neue Nachrichten ersetzt werden. Gleichfalls kann es vorgesehen sein, dass Nachrichten in der Datenbank 124 des Servers 110 ergänzt werden. Die neuen Nachrichten werden von dem Server 110 zusammen mit der Überschrift und dem zugeordneten Bild an das mobile Endgerät 110 übermittelt, wobei die Nachrichten eine Angabe über die zu ersetzende Nachricht erhalten, wenn eine Ersetzung einer bestehenden Nachricht vorgesehen ist. Hierzu können die Nachrichten beispielsweise mit einer Identifikationsnummer versehen werden, die von der Clienteinrichtung zur Identifizierung der Nachrichten herangezogen wird.

Wenn von dem Server 110 eine neue Nachricht an das mobile Endgerät 102 übertragen wird, dann werden die Überschrift der Nachricht und das der Nachricht zugeordnete Bild vorzugsweise erst dann in der Maske 600 dargestellt, wenn auch der in der Maske 700 darzustellende Text der Nachricht in dem mobilen Endgerät 100 empfangen worden ist. Um dies zu gewährleisten, werden die von dem Server 110 übermittelten und den Inhalt einer Nachricht enthaltenden Datenpakete als zusammengehörig gekennzeichnet, was beispielsweise in der zuvor bereits beschriebenen Weise erfolgen kann. Hierdurch kann die Maske 700 im Wesentlichen unmittelbar nach einer Auswahl der Nachricht in der Maske 600 dargestellt werden.

Der vollständige Inhalt der beim Start der Clienteinrichtung in der Datenbank 124 des Servers 110 vorliegenden Nachrichten, wird wie zuvor beschrieben, vollständig von dem Server 110 an das mobile Endgerät 102 übertragen, bevor die grafische Benutzeroberfläche und insbesondere die Maske 600 angezeigt wird. Somit ist auch bei diesen Nachrichten sichergestellt, dass die Maske 700 mit dem Nachrichtentext einer Nachricht im Wesentlichen unmittelbar nach einer Auswahl der Nachrichten in der Maske 700 angezeigt werden kann.

Die Durchführung der Aktualisierung bzw. Ergänzung der Nachrichten erfolgt anhand des zuvor beschriebenen Push-Verfahrens oder des ebenfalls zuvor beschriebenen Pull-Verfahrens in gleicher Weise wie die Aktualisierung der übrigen Inhalte. Sofern die Aktualisierung dabei eine Ersetzung einer in dem Speicher des mobilen Endgeräts 102 gespeicherten Nachricht vorsieht, löscht die Clienteinrichtung die zu ersetzende Nachricht, nachdem die neue Nachricht vollständig in dem mobilen Endgerät 102 empfangen worden ist. Dabei kann es vorgesehen sein, dass die Clienteinrichtung beim Empfang neuer Nachrichten jeweils den letzten bzw. untersten Listeneintrag der in dem Listenbereich 604 der Maske 600 angezeigten Liste löscht und einen neuen Listeneintrag erzeugt, der vor der ersten Stelle der bestehenden Liste, d.h. an oberster Position der Liste eingefügt wird. Sofern die neue Nachricht die bestehenden Nachrichten ergänzen soll, wird vorzugsweise gleichfalls ein neuer Listeneintrag erzeugt und an oberster Position der Liste eingefügt. Ein Löschen von Nachrichten erfolgt hierbei jedoch nicht.

Die zuvor beschriebene Clienteinrichtung erlaubt es, dem Nutzer des mobilen Endgeräts 102, einen Fußballwettbewerb im Wesentlichen in Echtzeit zu verfolgen. Der Fachmann erkennt dabei, dass die Clienteinrichtung in ähnlicher Weise auch zur Darstellung weiterer Inhalte, wie insbesondere zur Darstellung von Wettbewerben anderer Sportarten, oder zur Darstellung allgemeiner Nachrichten oder dergleichen eingesetzt werden kann.

## Patentansprüche

1. Verfahren zum Anzeigen von ereignisbezogenen Inhalten an einem mobilen Endgerät (102), wobei die Inhalte einen ersten Bestandteil und einen mit dem ersten Bestandteil verknüpften zweiten Bestandteil umfassen und der zweite Bestandteil aufgrund einer während einer Anzeige des ersten Bestandteils ausführbaren Bedienaktion an dem mobilen Endgerät (102) angezeigt werden kann, wobei
der erste Bestandteil der Inhalte in Verbindung mit dem zweiten Bestandteil der Inhalte in dem mobilen Endgerät (102) empfangen wird, und
der erste Bestandteil der Inhalte erst dann an dem mobilen Endgerät (102) angezeigt wird, wenn der zweite Bestandteil der Inhalte teilweise in dem mobilen Endgerät (102) empfangen worden ist, wobei
die Anzeige des ersten Bestandteils der Inhalte solange verzögert wird, bis ein vorgegebener Teil des zweiten Bestandteils in dem mobilen Endgerät (102) empfangen worden ist und wobei der erste Bestandteils angezeigt wird, bevor der zweite Bestandteil vollständig an das mobile Endgerät übertragen worden ist,
**dadurch gekennzeichnet, dass**
der erste Bestandteil und/oder der zweite Bestandteil der Inhalte zusammen mit einem Grafikelement (214) angezeigt werden und dass das Grafikelement (214) auf dem mobilen Endgerät (102) unter einer Kennung in einem Speicher (120) hinterlegt ist, wobei lediglich die Kennung des Grafikelementes von einem Server (110) an das mobile Endgerät (102) übertragen wird.

2. Verfahren nach Anspruch 1,
**dadurch gekennzeichnet,**
**dass** der erste und der zweite Bestandteil der Inhalte von einem Server (110) an das mobile Endgerät (102) übertragen wird.

3. Verfahren nach Anspruch 2,
**dadurch gekennzeichnet,**
**dass** der erste und der zweite Bestandteil der Inhalte im Bereich des Servers (110) gespeichert sind und im Bereich des Servers (110) aktualisiert werden.

4. Verfahren nach einem der vorangegangenen Ansprüche,
**dadurch gekennzeichnet,**
**dass** der erste und der zweite Bestandteil der Inhalte aufgrund einer im Bereich des Servers (110) vorgenommenen Aktualisierung der Inhalte von dem Server (110) an das mobile Endgerät (102) gesendet werden.

5. Verfahren nach einem der vorangegangenen Ansprüche
**dadurch gekennzeichnet,**
**dass** der erste und der zweite Bestandteil der Inhalte durch das mobile Endgerät (102) in regelmäßigen Zeitabständen von dem Server (110) abgerufen werden.

6. Verfahren nach einem der vorangegangenen Ansprüche,
**dadurch gekennzeichnet,**
**dass** der empfangene erste Bestandteil der Inhalte einen in dem mobilen Endgerät (102) gespeicherten ersten Bestandteil der Inhalte ersetzt und/oder der empfangene zweite Bestandteil der Inhalte einen in dem mobilen Endgerät (102) gespeicherten zweiten Bestandteil der Inhalte ersetzt.

7. Verfahren nach einem der vorangegangenen Ansprüche,
**dadurch gekennzeichnet,**
**dass** das Grafikelement (214a; 214b) anhand einer zusammen mit dem ersten Bestandteil und/oder dem zweiten Bestandteil der Inhalte an das mobile Endgerät (102) übertragenen Identifizierungsangabe aus einer Mehrzahl von in dem mobilen Endgerät (102) gespeicherten Grafikelementen (214a; 214b) ausgewählt wird.

8. Verfahren nach einem der vorangegangenen Ansprüche,
**dadurch gekennzeichnet,**
**dass** der erste und der zweite Bestandteil der Inhalte jeweils in einer Maske (300; 400; 500) einer grafischen Benutzeroberfläche angezeigt werden.

9. Computerprogrammprodukt,
**dadurch gekennzeichnet,**
**dass** es ein Computerprogramm aufweist, das Anweisungen zur Ausführung eines Verfahrens nach einem der vorangegangenen Ansprüche umfasst.

10. Clienteinrichtung für ein mobiles Endgerät (102) zum Darstellen von über ein Mobilfunknetz (104) bereitgestellten ereignisbezogenen Inhalten, wobei die Inhalte einen ersten Bestandteil und einen mit dem ersten Bestandteil verknüpften zweiten Bestandteil umfassen und wobei die Clienteinrichtung eine grafische Benutzerschnittstelle bereitstellt, die dazu ausgebildet ist, den zweiten Bestandteil aufgrund einer während einer Anzeige des ersten Bestandteils ausgeführten Bedienaktion anzuzeigen, wobei
die Clienteinrichtung dazu ausgebildet ist, den ersten Bestandteil der Inhalte in Verbindung mit dem zweiten Bestandteil der Inhalte zu empfangen, und wobei die grafische Benutzerschnittstelle dazu ausgebildet ist, den ersten Bestandteil der Inhalte erst dann anzuzeigen, wenn der zweite Bestandteil der Inhalte teilweise in dem mobilen Endgerät (102) empfangen worden ist, wobei die Anzeige des ersten Bestandteils der Inhalte solange verzögerbar ist, bis ein vorgegebener Teil des zweiten Bestandteils in dem mobilen Endgerät (102) empfangen worden ist, wobei der erste Bestandteils anzeigbar ist, bevor der zweite Bestandteil vollständig von dem mobile Endgerät übertragen worden ist, **dadurch gekennzeichnet, dass** die grafische Benutzerschnittstelle dazu ausgebildet ist, den ersten Bestandteil und/oder den zweiten Bestandteil der Inhalte zusammen mit einem Grafikelement (214) anzuzeigen, wobei das Grafikelement (214) auf dem mobilen Endgerät (102) unter einer Kennung in einem Speicher (120) hinterlegt ist, wobei das Endgerät dazu ausgebildet ist, die Kennung des Grafikelementes von einem Server (110) zu empfangen.

11. Mobiles Endgerät (102), welches mit einem Mobilfunknetzwerk (104) verbindbar ist,
**dadurch gekennzeichnet,**
**dass** es eine Clienteinrichtung nach Anspruch 10 aufweist.

## Claims

1. Method for displaying event-related content on a mobile terminal (102),
wherein the content comprises a first component and a second component linked to the first component and the second component can be displayed on the mobile terminal (102) based on an operating action that can be performed during a display of the first component, wherein
the first component of the content is received in connection with the second component of the content in the mobile terminal (102), and
the first component of the content is only displayed on the mobile terminal (102) when the second component of the content has been partially received in the mobile terminal (102), wherein
the display of the first component of the content is delayed until a predetermined portion of the second component has been received in the mobile terminal (102) and wherein the first component is displayed before the second component has been completely transmitted to the mobile terminal,
**characterised in that**
the first component and/or the second component of the content are displayed together with a graphic element (214) and that the graphic element (214) is stored on the mobile terminal (102) under an identifier in a memory (120), wherein only the identifier of the graphic element is transmitted from a server (110) to the mobile terminal (102).

2. Method according to claim 1,
**characterised in**
**that** the first and the second component of the content are transmitted from a server (110) to the mobile terminal (102).

3. Method according to claim 2,
**characterised in**
**that** the first and the second component of the content are stored in the region of the server (110) and are updated in the region of the server (110).

4. Method according to any one of the preceding claims,
**characterised in**
**that** the first and the second component of the content are transmitted, based on updating of the content undertaken in the region of the server (110), from the server (110) to the mobile terminal (102).

5. Method according to any one of the preceding claims,
**characterised in**
**that** the first and the second component of the content are retrieved by the mobile terminal (102) from the server (110) at regular intervals.

6. Method according to any one of the preceding claims,
**characterised in**
**that** the received first component of the content replaces a first component of the content stored in the mobile terminal (102) and/or the received second component of the content replaces a second component of the content stored in the mobile terminal (102).

7. Method according to any one of the preceding claims,
**characterised in**
**that** the graphic element (214a; 214b) is selected from a plurality of graphic elements (214a; 214b) stored in the mobile terminal (102) by means of an identification detail transmitted together with the first component and/or the second component of the content to the mobile terminal (102).

8. Method according to any one of the preceding claims,
**characterised in**
**that** the first and the second component of the content are each displayed in a mask (300; 400; 500) of a graphical user interface.

9. Computer program product,
**characterised in**
**that** it has a computer program, which comprises instructions for executing a method according to any one of the preceding claims.

10. Client device for a mobile terminal (102) for presenting event-related content provided via a mobile network (104), wherein the content comprises a first component and a second component linked to the first component and wherein the client device provides a graphical user interface that is designed to display the second component based on an operating action performed during a display of the first component, wherein
the client device is designed to receive the first component of the content in connection with the second component of the content, and wherein the graphical user interface is designed to display the first component of the content only when the second component of the content has been partially received in the mobile terminal (102), wherein the display of the first component of the content can be delayed until a predetermined portion of the second component has been received in the mobile terminal (102), wherein the first component can be displayed before the second component has been transmitted completely by the mobile terminal, **characterised in that** the graphical user interface is designed to display the first component and/or the second component of the content together with a graphic element (214), wherein the graphic element (214) is stored on the mobile terminal (102) under an identifier in a memory (120), wherein the terminal is designed to receive the identifier of the graphic element from a server (110).

11. Mobile terminal (102) which can be connected to a mobile network (104),
**characterised in**
**that** it has a client device according to claim 10.

## Revendications

1. Procédé destiné à l'affichage de contenus en rapport avec des événements sur un terminal mobile (102), les contenus comprenant un premier élément et un second élément lié au premier élément et le second élément pouvant être affiché par suite d'une action de commande sur le terminal mobile (102) exécutable pendant l'affichage du premier élément,
le premier élément des contenus étant reçu dans le terminal mobile (102) en liaison avec le second élément des contenus, et le premier élément des contenus étant affiché sur le terminal mobile (102) uniquement quand le second élément des contenus a été partiellement reçu dans le terminal mobile (102),
l'affichage du premier élément des contenus étant retardé jusqu'à ce qu'une partie prédéfinie du second élément ait été reçue dans le terminal mobile (102) et le premier élément étant affiché avant que le second élément ait été entièrement transmis au terminal mobile,
**caractérisé en ce**
**que** le premier élément et/ou le second élément des contenus sont affichés conjointement avec un élément graphique (214) et **en ce que** l'élément graphique (214) est enregistré dans une mémoire (120) sur le terminal mobile (102) sous un identifiant, seul l'identifiant de l'élément graphique étant transmis au terminal mobile (102) par un serveur (110).

2. Procédé selon la revendication 1,
**caractérisé en ce**
**que** le premier et le second élément des contenus sont transmis au terminal mobile (102) par un serveur (110).

3. Procédé selon la revendication 2,
**caractérisé en ce**
**que** le premier et le second élément des contenus sont enregistrés dans la zone du serveur (110) et sont mis à jour dans la zone du serveur (110).

4. Procédé selon l'une des revendications précédentes,
**caractérisé en ce**
**que** le premier et le second élément des contenus sont envoyés au terminal mobile (102) par le serveur (110) par suite d'une mise à jour des contenus effectuée dans la zone du serveur (110).

5. Procédé selon l'une des revendications précédentes,
**caractérisé en ce**
**que** le premier et le second élément des contenus sont appelés par le terminal mobile (102) auprès du serveur (110) à intervalles réguliers.

6. Procédé selon l'une des revendications précédentes,
**caractérisé en ce**
**que** le premier élément des contenus reçu remplace un premier élément des contenus enregistré dans le terminal mobile (102) et/ou le second élément des contenus reçu remplace un second élément des contenus enregistré dans le terminal mobile (102).

7. Procédé selon l'une des revendications précédentes,
**caractérisé en ce**
**que** l'élément graphique (214a ; 214b) est sélectionné parmi une pluralité d'éléments graphiques (214a ; 214b) enregistrés dans le terminal mobile (102) à l'aide d'une indication d'identification transmise au terminal mobile (102) conjointement avec le premier élément et/ou le second élément des contenus.

8. Procédé selon l'une des revendications précédentes,
**caractérisé en ce**
**que** le premier et le second élément des contenus sont respectivement affichés dans un masque (300 ; 400 ; 500) d'une interface utilisateur graphique.

9. Produit de programme informatique,
**caractérisé en ce**
**qu'**il comporte un programme informatique, qui comprend des instructions pour exécuter un procédé selon l'une des revendications précédentes.

10. Dispositif client pour terminal mobile (102) destiné à représenter des contenus en rapport avec des événements mis à disposition par le biais d'un réseau de téléphonie mobile (104), les contenus comprenant un premier élément et un second élément lié au premier élément et le dispositif client mettant à disposition une interface utilisateur graphique, qui est conçue pour afficher le second élément par suite d'une action de commande exécutée pendant un affichage du premier élément,
le dispositif client étant conçu pour recevoir le premier élément des contenus en liaison avec le second élément des contenus, et l'interface utilisateur graphique étant conçue pour afficher le premier élément des contenus uniquement quand le second élément des contenus a été partiellement reçu dans le terminal mobile (102), l'affichage du premier élément des contenus pouvant être retardé jusqu'à ce qu'une partie prédéfinie du second élément ait été reçue dans le terminal mobile (102), le premier élément pouvant être affiché avant que le second élément ait été entièrement transmis par le terminal mobile, **caractérisé en ce que** l'interface utilisateur graphique est conçue pour afficher le premier élément et/ou le second élément des contenus conjointement avec un élément graphique (214), l'élément graphique (214) étant enregistré dans une mémoire (120) sur le terminal mobile (102) sous un identifiant, le terminal mobile étant conçu pour recevoir l'identifiant de l'élément graphique envoyé par un serveur (110).

11. Terminal mobile (102), qui peut être connecté à un réseau de téléphonie mobile (104),
**caractérisé en ce**
**qu'**il comporte un dispositif client selon la revendication 10.
